# EUROPÄISCHE PATENTSCHRIFT

(11) **EP 1 347 376 B1**
(45) Veröffentlichungstag und Bekanntmachung des Hinweises auf die Patenterteilung: **02.05.2007**
(21) Anmeldenummer: 03005016.5
(22) Anmeldetag: 05.03.2003
(51) Int. Cl.: G06F 9/44

(54) **Software zur Visualisierung hierarchisch stufbaren Objekten**
Software visualizing hierarchically structured objects
Logiciel visualisant des structures hierarchisées de données

(30) Priorität: 18.03.2002 DE 10211953
(43) Veröffentlichungstag der Anmeldung: 24.09.2003
(73) Patentinhaber: SIEMENS AKTIENGESELLSCHAFT, 80333 München (DE)
(72) Erfinder: Herkert, Gebhard, 74838 Limbach (DE)

(56) Entgegenhaltungen:
- US-A- 5 619 638
- US-A- 5 644 771
- US-A- 6 028 998

## Beschreibung

Die Erfindung betrifft eine Softwarekomponente zur Projektierung von Automatisierungssystemen.

Eine derartige Komponente kommt insbesondere im Bereich der Automatisierungstechnik zum Einsatz. Für die Erstellung, Bearbeitung, Analyse und Anzeige eines derartigen Automatisierungsprogramms kommen Programmierwerkzeuge zum Einsatz, die auf einer Datenverarbeitungsvorrichtung ablauffähig sind.

Für die Projektierung von Automatisierungsanlagen existieren zur Zeit unterschiedliche Spezialsysteme mit eigenständiger Datenhaltung. Beispiele für derartige Systeme sind: Signallisten für speicherprogrammierbare Steuerungen (SPS-Signallisten) SPS-Ablaufprogramme, NC-Programme, Rezeptsteuerungen, Systeme zum Bedienen und Beobachten etc.. Für derartige Spezialsysteme werden unterschiedliche Datenablagen und Datenstrukturen verwendet. Ebenso sind Bearbeitungsmechanismen häufig mehrfach zu realisieren und zu pflegen, was zu einem erhöhten Entwicklungsaufwand führt.

Aus US-A-5 619 638 ist ein objektorientiertes Computersystem mit Repräsentationsobjekten bekannt. Die Repräsentationsobjekte ermöglichen eine Alternative oder auch eine Vielfachpräsentation der einzelnen Datenobjekte, beispielsweise können alternativ Balken- und Kuchendiagramme aus einem einzelnen Datenbestand heraus dargestellt werden.

US-A-5 644 771 betrifft ein Verfahren zum Handling verschiedener Objekte. Das vorgeschlagene Objektmodell besteht aus drei Schlüsseldatenstrukturen: der Objektstruktur, der Interfacetabelle und der Methodentabelle.

Aus US-A-6 028 998 ist ein Anwendungsrahmenprogramm für die Konstruktion von Gebäudeautomatisierungssystem bekannt. Das Gebäudeautomatisierungsanwendungsrahmenprogramm definiert eine objektorientierte Klassenhierarchie, in welcher ein Standardobjekt "Superclas" eine Vielzahl von verschiedenen Standardobjekten definiert, die durch ein entsprechendes Werkzeug in größere und komplexere Gebäudeautomatisierungssysteme zusammengesetzt werden kann. Das Standardobjekt beinhaltet eine Sichtkomponente, die Implementierungsdetails bezüglich "Anzeige" beinhaltet, sowie Kommandokomponenten, die Verfahren beinhalten, um bestimmte Steuerungen bei anderen Objekten hervorzurufen.

Der Erfindung liegt die Aufgabe zugrunde, eine System bzw. ein Verfahren anzugeben, das eine einheitliche Projektierung bei gleichzeitiger hoher Datenkonsistenz ermöglicht.

Diese Aufgabe wird durch die Kombination der in Anspruch 1, angegeben Merkmale gelöst.

Der Erfindung liegt die Erkenntnis zugrunde, dass bei einem Projektierungssystem von Softwarekomponenten eines Automatisierungssystems in der Regel Daten mehrfach vorhanden sind, diese Daten in der Regel mehrfach eingegeben werden müssen, wodurch sich neben einem wesentlich erhöhten Pflegeaufwand auch eine höhere Fehleranfälligkeit sowie Probleme bezüglich einer Datenkonsistenz ergeben. Die Softwarearchitektur des neuen Systems basiert hingegen auf einer Softwarekomponente, die eine Datenstruktur aus einem Objektbaum mit hierarchisch stufbaren Objekten aufweist. Eine derartige Datenstruktur ermöglicht eine einzige Datenhaltung für sämtliche Teilsysteme, wie beispielsweise Ablaufprogramme, Verknüpfungssteuerungen, 2D-Visualisierung, 3D-Visualisierung etc.. Sämtliche Softwarekomponenten weisen eine einheitliche Datenstruktur und Datenbasis für sämtliche Anlagenkomponenten auf, da alle Komponenten ein und demselben strukturellen Mechanismus unterliegen. Insgesamt ergibt sich eine einzige Objektstruktur innerhalb eines Projektes, so dass Änderungen auch mittels eines einzigen Kopiermechanismus, mittels eines einzigen Instanzierungsmechanismus, mittels eines einzigen Löschmechanismus usw. ermöglicht wird. Die Basis einer einzigen Objektstruktur betrifft dabei sowohl Klassen, als auch Instanzen von Softwarekomponenten. Dies führt dazu, dass bei der Modifizierung von Klassen sofort alle Instanzen datentechnisch aktualisiert werden können, wodurch zu jeder Zeit eine Datenkonsistenz erreicht wird bzw. erreicht werden kann.

Ein deutlich verringerter Aufwand bei der Datenpflege wird auf vorteilhafte Weise dadurch weiter unterstützt, dass der Objektbaum zur Abbildung sämtlicher Sichten einer Softwarekomponente vorgesehen ist. Sämtliche Sichten der Softwarekomponente sind dabei in einer einzigen Struktur, nämlich in dem Objektbaum vorhanden, so dass für Lösch- und Kopiervorgänge einer derartigen Softwarekomponente lediglich ein einziger Lösch- bzw. Kopiermechanismus erforderlich ist.

Eine einfache Erzeugung von Prototypen einer Softwarekomponente wird dadurch erzielt, dass das System eine erste Softwarekomponentenart als Klasse einer Softwarekomponente aufweist.

Ein sofortiger funktioneller Test einer Softwarekomponente kann auf einfache Weise ohne zusätzlichen Aufwand beispielsweise durch Kompilierung dadurch sichergestellt werden, dass die erste Softwarekomponentenart Daten und/oder ablauffähige Funktionen enthält.

Eine einfache Erzeugung von Maschinensprache kann dadurch ermöglicht werden, dass das System einen Generieralgorithmus enthält, der zur Generierung von Maschinensprache aus dem Objektbaum vorgesehen ist. (z.B. S7 -Code)

Eine aufwandsarme Wiederverwendung bereits erzeugter Softwarekomponenten wird dadurch erzielt, dass das System eine zweite Softwarekomponentenart als Instanz der Softwarekomponente aufweist. Eine derartige Instanz einer Klasse ist ein vollständiges Duplikat der entsprechenden Klasse der Softwarekomponente einschließlich sämtlicher Daten und Funktionen.

Eine automatische Änderung der Daten von einer Klasse zugehörigen Instanzen wird in der Weise sichergestellt, dass das System Mittel zur automatischen Änderung einer aus einer Klasse erzeugten Instanz aufweist, falls die entsprechende Klasse geändert wird. Ebenso führt die Änderung einer Instanz sowohl zur Änderung der Klasse sowie aller weiteren Instanzen.

Eine durchgängige Datenhaltung sowohl für Klassen als auch für Instanzen ergibt sich dadurch, dass die erste und die zweite Softwarekomponentenart gleich aufgebaut sind.

Eine einfache und übersichtliche Architektur der einzelnen Objekte ergibt sich dadurch, dass das Objekt einer Softwarekomponente aus Objektknoten besteht.

Eine aufwandsarme Mehrsprachigkeit der Softwarekomponenten kann dadurch erzielt werden, dass ein Objektknoten eine Identifizierungsnummer zur Definition unterschiedlicher Fremdsprachentexte eines Objekts besitzt.

Eine Erzeugung komplexer Objekte aus einzelnen einfacheren Objekten kann dadurch erfolgen, dass die Basisknoten zur Generierung von komplexeren Objekten hierarchisierbar sind.

Eine durchgängige Grundarchitektur der Objekte und Softwarekomponenten wird in der Weise erreicht, dass das Objekt eine elementare Knotenfunktion mit einer hierarchischen Verzeigerung aufweist.

Zusätzlich ist ein Link-Mechanismus vorgesehen, der sowohl eine Verknüpfung von Signalen als auch von Objekten ermöglicht.

Die Definition eines bestimmten Objektverhaltens kann auf sichere und einfache Weise dadurch erfolgen, dass das Objekt mit einer Basisknotenfunktion zur Bestimmung der Funktionalität eines Knotens versehen ist.

Eine Verknüpfung von komplexeren Objekten mit anderen komplexen Objekten wird dadurch ermöglicht, dass den jeweils zu verknüpfenden Objekten mindestens eine Instanz einer gemeinsamen Interfaceklasse zuordenbar ist. Durch Verschalten der Interfaceklassen wird ein Signalaustausch ermöglicht.

Die Gesamtfunktionalität einer Softwarekomponente auch für komplexere Objekte kann in der Weise definiert werden, dass zur Generierung einer Funktionalität eines Objekts und/oder einer Softwarekomponente ein Link-Mechanismus zum Verknüpfen von Signalen und/oder Objekten vorgesehen ist.

Eine Kompatibilität mit in der Automatisierungstechnik üblichen Beschreibungssprachen kann in der Weise sichergestellt werden, dass der Objektbaum zur Abbildung eines Funktionsplans, eines Flow-Charts und/oder einer Schrittkette einer Automatisierungskomponente vorgesehen ist.

Auch 2D und 3D-Grafiken können auf einfache Weise dadurch erzielt werden, dass der Objektbaum zur Abbildung einer 2D-und/oder einer 3D-Grafik vorgesehen ist.

Eine Generierung von komplexeren Objekten aus zuvor generierten weniger komplexen Objekten kann in der Weise erfolgen, dass das System ein Typ-Instanzkonzept enthält, welches dazu vorgesehen ist, dass bei Änderungen einer Klasse alle Instanzen unmittelbar oder gesteuert mitgeändert werden.

Im folgenden wird die Erfindung anhand der in den Figuren dargestellten Ausführungsbeispiele näher beschrieben und erläutert.

Es zeigen:
- FIG 1a: ein Blockschaltbild zum Grundaufbau eines Automatisierungssystems mit einem OTR-Kern als Projektierungssystem,
- FIG 1b: ein Blockschaltbild zum Grundaufbau eines Automatisierungssystems mit einem OTR-Kern als Projektierungssystem und OTR-Kern als Runtimesystem in einer speicherprogrammierbaren Steuerung (=SPS),
- FIG 2: eine schematische Darstellung des Grundaufbaus eines Objektbaums und dessen Zusammenwirken mit unterschiedlichen Sichten,
- FIG 3: eine schematische Darstellung zum prinzipiellen Zusammenspiel verschiedener Objektbäume,
- FIG 4: eine prinzipielle Darstellung zur allgemeinen Datenstruktur eines Objekts eines Objektbaums,
- FIG 5: eine prinzipielle Darstellung zur Datenstruktur eines Objekts zur Erzeugung mehrsprachiger Softwarekomponenten,
- FIG 6: eine schematische Darstellung eines Objektbaums mit verzeigerten Objekten,
- FIG 7: eine schematische Darstellung eines Bildschirmfensters zur Definition der Funktionalitäten eines Objektbaums mit hierarchisch stufbaren Objekten,
- FIG 8: eine beispielhafte Darstellung zur Erzeugung von Funktionsplänen mittels eines Objektbaums,
- FIG 9: eine beispielhafte Darstellung zur Erzeugung von 3D-Gafiken mittels eines Objektbaums,
- FIG 10: einen Objektbaum mit verzeigerten Objekten unter Anwendung des Typ-Instanzkonzepts,
- FIG 11: eine Prinzipdarstellung für einen Aufbau von Anlagenmodulen mittels eines Typ-Instanzkonzeptes,
- FIG 12a: eine beispielhafte Darstellung einer Schrittkette,
- FIG 12b: einen Objektbaum als Abbildung der in FIG 12a gezeigten Schrittkette,
- FIG 13: eine Beispiel für den praktischen Einsatz des Typ-Instanzkonzeptes bei der Projektierung eines Automatisierungssystems und
- FIG 14a,b: jeweils ein Beispiel für den praktischen Einsatz des Typ-Instanzkonzeptes mit OTR-Interfacetechnik.

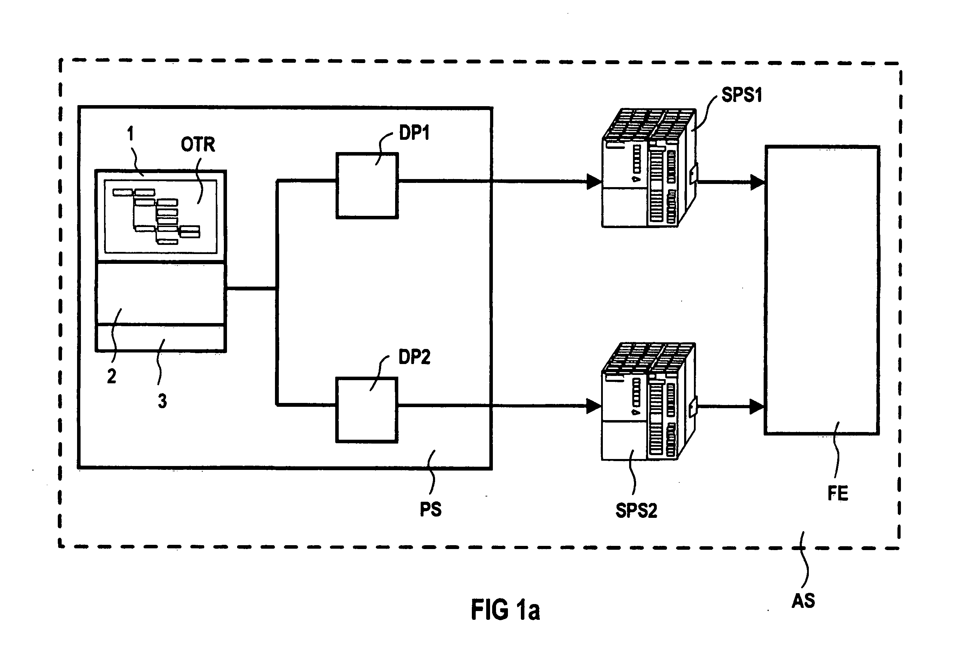

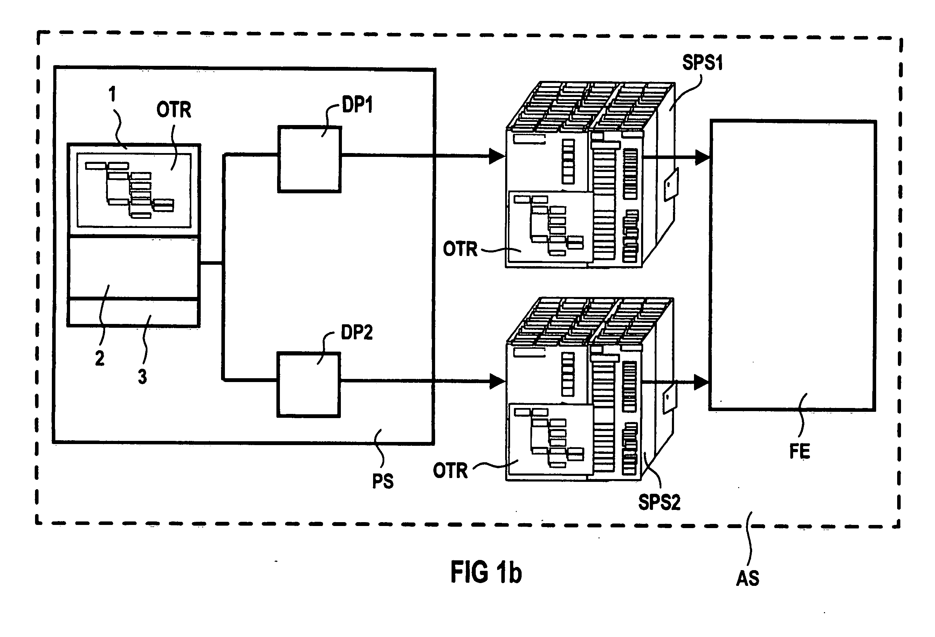

FIG 1 zeigt eine Prinzipdarstellung eines Blockschaltbilds zur Projektierung und Programmierung eines Automatisierungssystem AS. Das Automatisierungssystem AS besteht aus einem Projektiersystem PS, aus einer ersten speicherprogrammierbaren Steuerung SPS1, aus einer zweiten speicherprogrammierbaren Steuerung SPS2 sowie aus einer Fertigungseinrichtung FE. Das Projektiersystem PS dient der Erstellung von einem ersten Datenprogramm DP1, welches auf der ersten speicherprogrammierbaren Steuerung SPS1 ablauffähig ist, sowie der Erstellung eines zweiten Datenprogramms DP2, welches auf der zweiten speicherprogrammierbaren Steuerung SPS2 ablauffähig ist. Die Programmierung des ersten und zweiten Datenprogramms DP1, DP2 erfolgt mit Hilfe eines Computers 1, 2, 3, der aus einer Rechnereinheit 2, einer zugehörigen Tastatur 3 sowie einem Bildschirm 1 gebildet wird. Auf dem Bildschirm 1 des Rechners 1, 2, 3 ist beispielhaft ein Objektbaum OTR (object tree) der den grundsätzlichen Architekturaufbau der Softwarekomponenten der Datenprogramme DP1, DP2 kennzeichnet. Die Besonderheit des in FIG 1 dargestellten Ausführungsbeispiels liegt darin, dass sowohl das erste Datenprogramm DP1, als auch das zweite Datenprogramm DP2 jeweils auf Softwarekomponenten basieren, die eine Datenstruktur aus einem Objektbaum OTR mit hierarchisch stufbaren Objekten aufweisen.

Der auf einem Objektbaum mit hierarchisch stufbaren Objekten basierenden Softwarestruktur entstehen effiziente Bearbeitungsmechanismen, die es ermöglichen, sämtliche Strukturen in einem einheitlichen Datenmodell abzubilden. Insgesamt ergibt sich eine einheitliche Projektierung aller Anlagenbereiche der Fertigungseinrichtung FE bei gleichzeitig vollständig konsistenter Datenhaltung. Sämtliche Anlagenkomponenten der Fertigungseinrichtung sowie zugeordnete Sichten sind innerhalb der Objektbaumstruktur in einem einzigen Datenmodel gespeichert. Eine Mehrfacheingabe von Daten für unterschiedliche Spezialsysteme wird somit überflüssig.

FIG 1b zeigt ein Blockschaltbild zum Grundaufbau eines Automatisierungssystems mit einem OTR-Kern als Projektierungssystem und OTR-Kern als Runtimesystem in einer speicherprogrammierbaren Steuerung (=SPS). Bezüglich der funktionellen Zusammenhänge und auf die verwendeten Bezugszeichen wird auf Fig. 1 verwiesen.

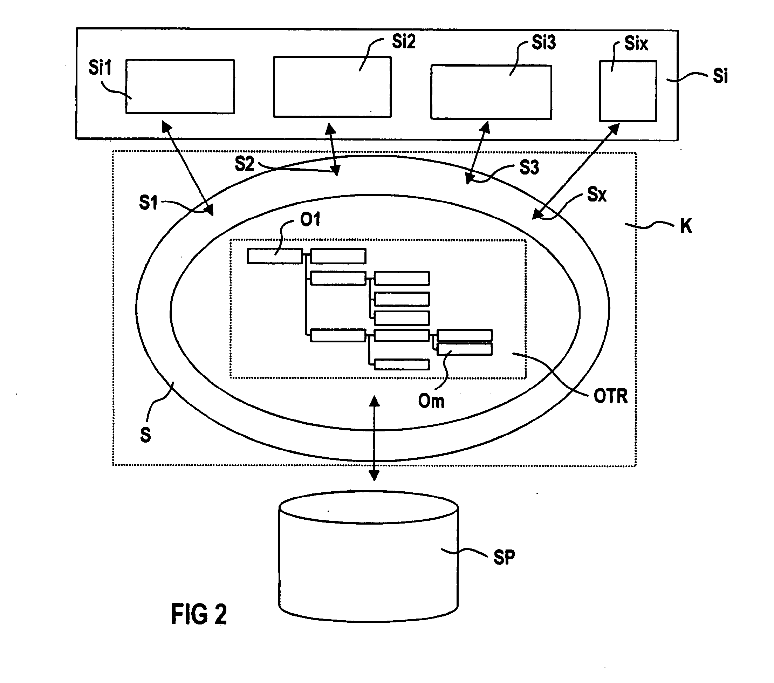

FIG 2 zeigt eine schematische Darstellung des Grundaufbaus eines Objektbaums OTR, einer Softwarekomponente K und dessen Zusammenwirken mit unterschiedlichen Sichten SI1..SIx. Die Basis der Objektbaumstruktur der Softwarekomponente K bildet der Objektbaum OTR, der aus hierarchisch stufbaren Objekten O1..Om zusammengesetzt ist. Die Softwarekomponente K weist darüber hinaus eine Schnittstelle S auf, die im einzelnen aus Einzelschnittstellen S1..Sy besteht. Die Softwarekomponente K ist auf einem Speichermedium SP gespeichert.

Die Besonderheit der in FIG 2 dargestellten Datenstruktur besteht unter anderem darin, dass sämtliche Sichten SI..SIx der Softwarekomponente K konkret mit Daten des Objektbaums OTR der Softwarekomponente K verbunden sind. Hierdurch ergibt sich eine einzige Datenhaltung für sämtliche Sichten, so dass Dateninkonsistenzen nicht nur vermieden, sondern vielmehr unmöglich werden.

Bei den in FIG 2 dargestellten Ausführungsbeispiel dient die erste Sicht SI1 beispielsweise der Darstellung der Softwarekomponente in einer 3D-Sicht, die zweite Sicht SI2 der Softwarekomponente K einer Flow-Chart-Sicht oder einer SFC-Sicht und die dritte Sicht SI3 beispielsweise einer Tabellensicht der Softwarekomponente. Die in FIG 2 gezeigte Datenstruktur ist die Basis für einen effizienten Bearbeitungsmechanismus, der es ermöglicht, sämtliche Strukturen insbesondere einer Automatisierungsanlage in einem einheitlichen Datenmodel abzubilden. Da alle Komponenten ein und demselben strukturellen Mechanismus unterliegen, können Softwarekomponenten und deren Objekte über diesen einheitlichen Mechanismus mit anderen Objekten uns Softwarekomponenten verknüpft werden.

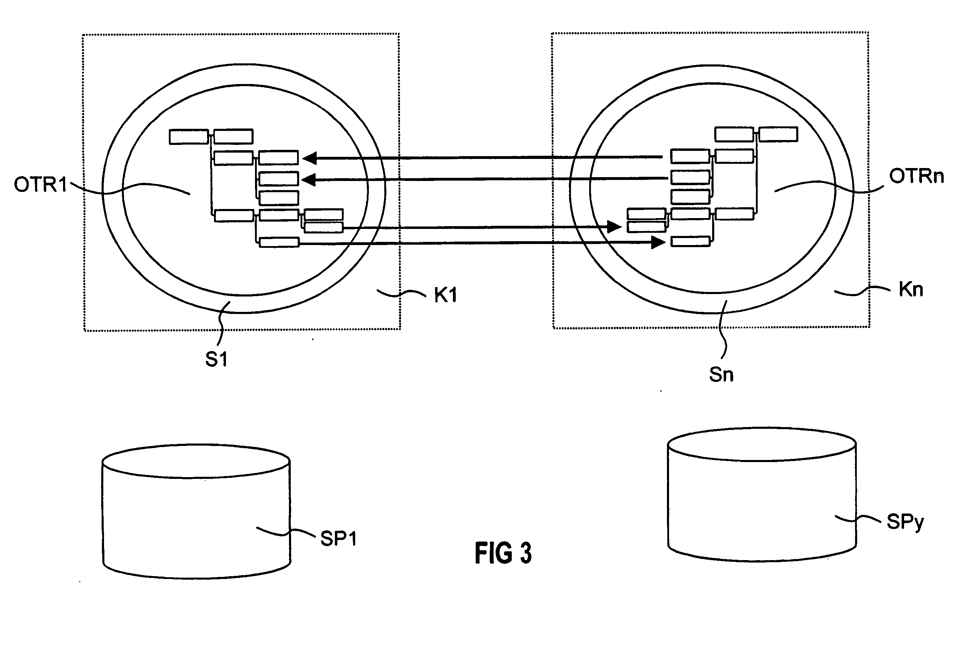

FIG 3 zeigt eine schematische Darstellung zum prinzipiellen Zusammenspiel mehrerer Softwarekomponenten K1..Kn als Verbindung verschiedener Objektbäume. Die Softwarekomponenten K1..Kn weisen dabei wiederum denselben strukturellen Aufbau auf, wie die Softwarekomponente, die bereits im Zusammenhang mit FIG 2 erläutert wurde. Bei den in FIG 3 dargestellten Ausführungsbeispiel sind die Daten der ersten Softwarekomponente K1 auf einen ersten Datenspeicher SP1 und die Daten der Softwarekomponente Kn auf einen Datenspeicher SPy abgespeichert. Über gestrichelte Pfeile ist jedoch angedeutet, dass die Softwarekomponenten K1..Kn auch jeweils auf anderen Datenspeichern abspeicherbar sind.

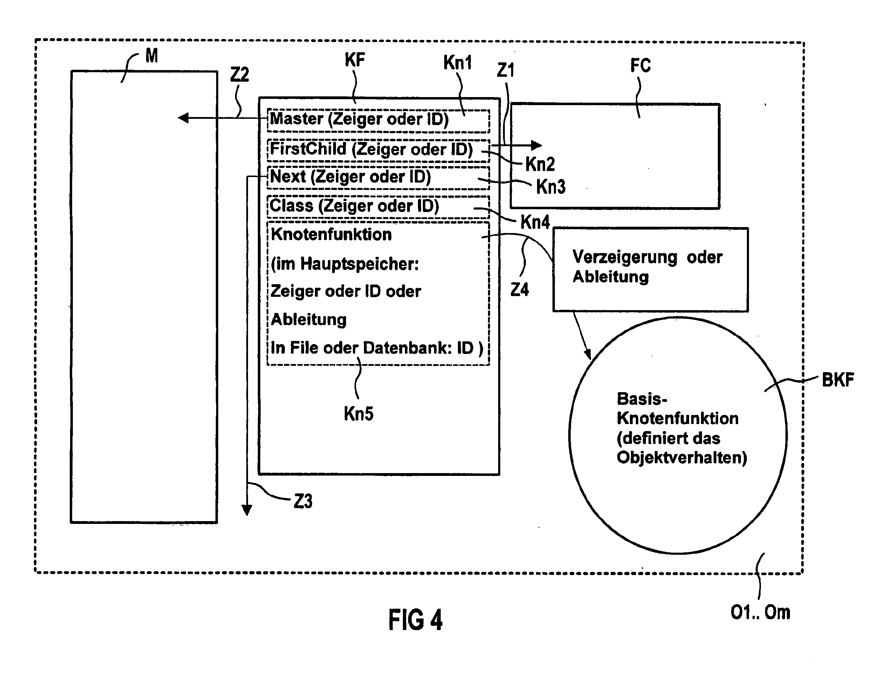

FIG 4 zeigt eine prinzipielle Darstellung zur allgemeinen Datenstruktur eines Objekts O1..Om, wie es innerhalb eines Objektbaums (vergleiche FIG 2) Verwendung findet. Das in FIG 4 gezeigte Objekt O1..Om besteht aus einem Datenblock KF, der die Knotenfunktion des Objekts O1..Om beschreibt. Die elementare Knotenfunktion des Objekts O1..Om besteht dabei aus einer hierarchischen Verzeigerung mittels Zeigern Z1..Z4 sowie einer Definition der Basisknotenfunktion BKF. Die Basisknotenfunktion BKF definiert dabei dass Objektverhalten des Objekts O1..Om. Die Funktionalität kann z.B. eine AND-Funktion sein, die die Funktion hat, die unterlagerten Objektknoten über eine logische AND-Funktion zu verknüpfen. Die Basisknoten sind hierarchisierbar und können somit zur Generierung von komplexeren Objekten genutzt werden. Der Zeiger Z2 verweist auf einen sogenannten Master M, während der Zeiger Z1 auf das erste Kind FC (First Child) verweist. In ähnlicher Weise sind im Datenblock KF, der die Knotenfunktion des Objekts O1..Om definiert, weitere Knotenfunktionen KN1..KN5 enthalten, wobei der Zeiger Z4 der Verzeigerung der Basisknotenfunktion BKF dient.

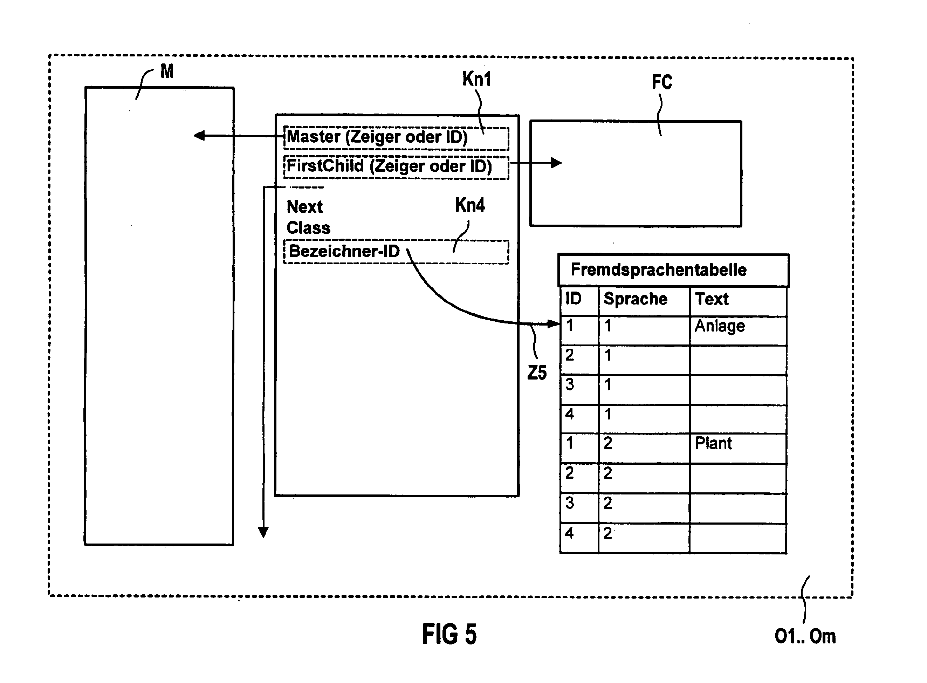

FIG 5 zeigt eine prinzipielle Darstellung zur Datenstruktur eines Objekts zur Erzeugung mehrsprachiger Softwarekomponenten. Der strukturelle Aufbau des Objekts entspricht dabei dem im Zusammenhang mit FIG 4 bereits gezeigten Grundaufbaus. Zusätzlich zu dem in FIG 4 gezeigten Knotenfunktionen enthält das in FIG 5 dargestellt Objekt eine weitere Knotenfunktion KN5, die über einen Zeiger Z5 auf eine Fremdsprachentabelle verweist. In der Fremdsprachentabelle sind jeweils über Identifizierungen unterschiedliche Sprachen und Textausgaben für die dem jeweiligen Objekt zugeordneten Sichten verlinkt. Das so vorliegende einheitliche Datenhaltungskonzept ermöglicht somit auf einfache Weise auch ein einheitliches Verfahren zur Übersetzung sämtlicher Anlagenkomponenten in unterschiedliche Fremdsprachen, ohne dass am strukturellen Grundaufbau der Softwarekomponenten Änderungen erforderlich wären.

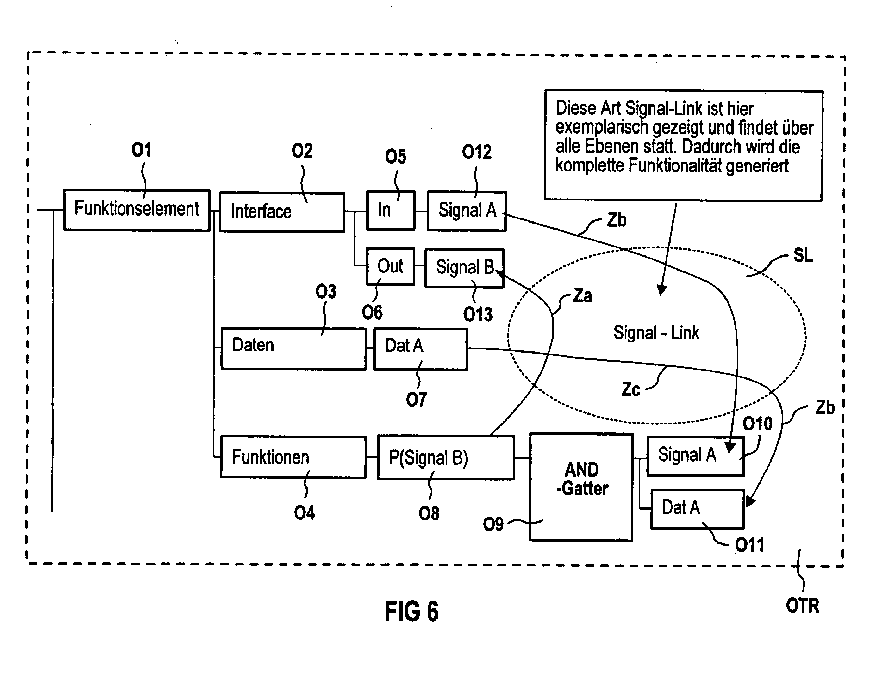

FIG 6 zeigt eine schematische Darstellung eines Objektbaums OTR. Der Objektbaum OTR besteht aus Objekten O1..O13. Die Funktionalität des in FIG 6 exemplarisch dargestellten Objektbaums OTR entsteht über einen Linkmechanismus SL zum Verknüpfen von einzelnen Objekten bzw. mittels Objekten definierten Signalen. Das Objekt O1 stellt ein Funktionselement dar, dass Objekt O2 ein Interface, das Objekt O3 definiert Daten, das Objekt O4 Funktionen. Die Objekte O5, O6 bilden einen Eingang bzw. einen Ausgang ab, während das Objekt O12 und O13 das jeweils zugehörige Eingangssignal A bzw. Ausgangssignal B kennzeichnen. Das Objekt 07 kennzeichnet ein Signal DATA und das Objekt ein Signal P, welches als Signal B über einen Zeiger ZA mit dem Objekt O13, d.h. mit dem Signal B verlinkt ist. Das Objekt O9 bildet ein Und-Gatter, während die Objekte O10 und O11 das Signal A kennzeichnet, welches über einen Zeiger ZB als Link zugeführt wird. Über einen Zeiger ZC wird das Objekt O7 mit dem Objekt O11 verlinkt.

FIG 6 zeigt einen durch den Linkmechanismus SL entstehenden Signalfluss zur Verknüpfung der Signale "Signal A" des Objekts O12 und des Objekts O7 ("DATA") über ein Und-Gatter O9. Das Ergebnis dieser Verknüpfung wird wiederum dem Signal B des Objekts O8 über einen Link ZA zugeführt. Mit Hilfe des in FIG 6 exemplarisch gezeigten Linkmechanismus können auch komplexe Objekte miteinander verknüpft werden, wie z.B. das dynamische Einblenden einer Maschine in die Sicht einer Anlage.

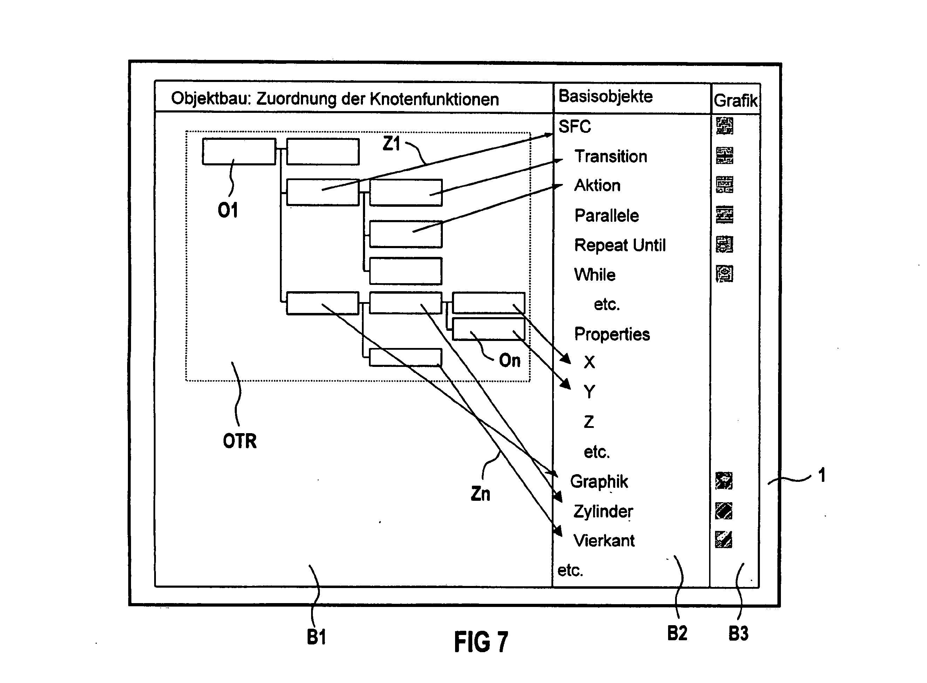

FIG 7 zeigt eine schematische Darstellung eines Bildschirmfensters 1 zur Definition der Funktionalitäten eines Objektbaums OTR mit hierarchisch stufbaren Objekten. Das Bildschirmfenster ist dabei in drei prinzipielle Bildschirmteilbereiche B1, B2, B3 unterteilt. Der erste Bildschirmteilbereich B1 zeigt den zu projektierenden Objektbaum OTR mit den Einzelobjekten, während der zweite Bildschirmbereich B2 die Knotenfunktionen von Basisobjekten tabellarisch auflistet. Eine diesen Basisobjekten zugeordnete Grafik ist im dritten Bildschirmbereich B3 - soweit vorhanden - grafisch dargestellt. Eine Zuordnung der jeweiligen Basisobjekte zu den einzelnen Objekten erfolgt über eine Verzeigerung der Einzelobjekte des Objektbaums OTR des ersten Bildschirmteilbereichs mit den jeweiligen Basisobjekten des zweiten Bildschirmbereichs B2.

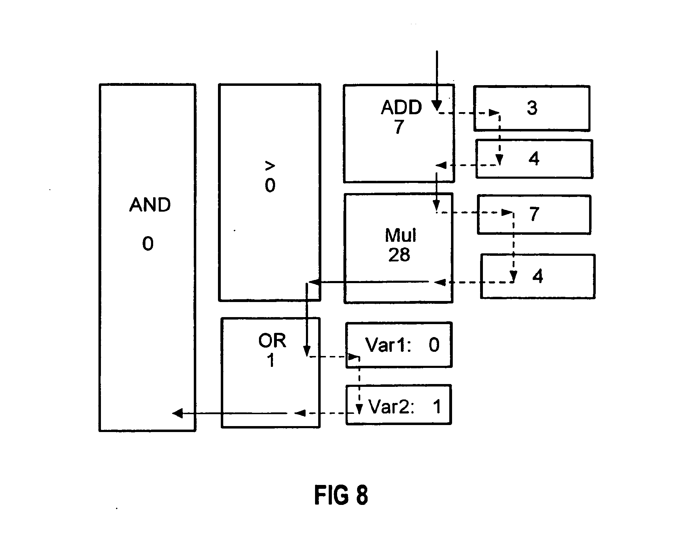

FIG 8 zeigt eine beispielhafte Darstellung zur Erzeugung von Funktionsplänen mittels eines Objektbaums. Als Beispiel ist in FIG 8 ein Logikgatter gezeigt, das jeweils aus Basisknoten zusammengesetzt wird.

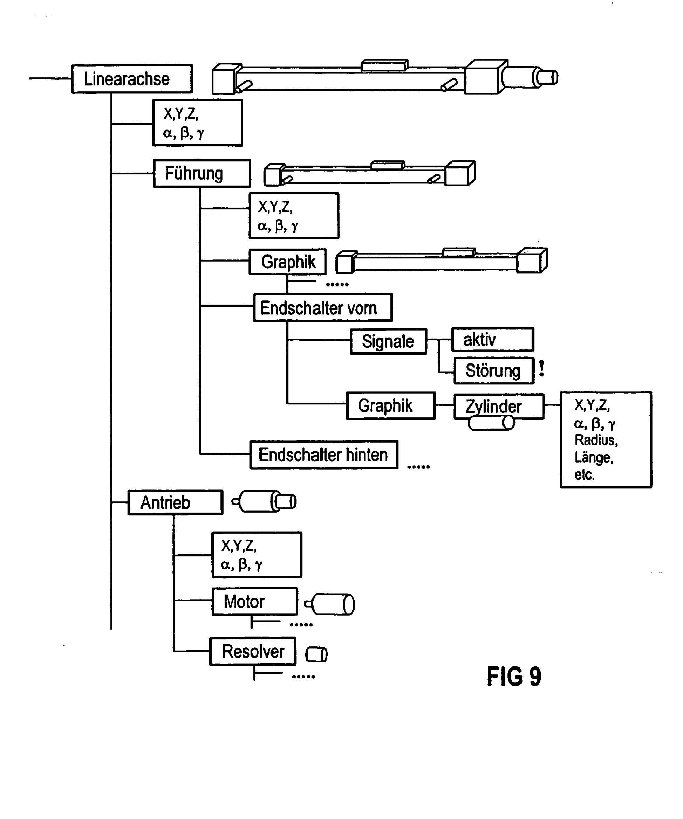

FIG 9 zeigt eine beispielhafte Darstellung zur Erzeugung von 3D-Grafiken mittels eines Objektbaums. Die jeweiligen 3D-Grafiken für eine Linearachse bestehen aus entsprechenden Unterobjekten, wie Führung und Antrieb. So ist die 3D-Grafik des in FIG 9 dargestellten Antriebs beispielsweise aus einem sogenannten Resolver sowie aus einem Motor zusammengesetzt. Die komplette Baumstruktur der 3D-Grafik wird dabei in der Objektbaumbasisstruktur abgelegt.

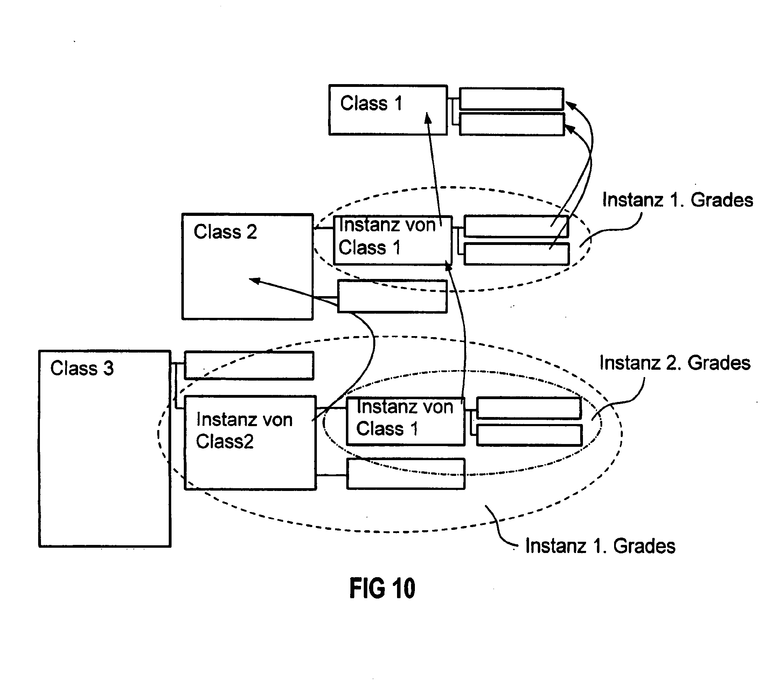

FIG 10 zeigt einen Objektbaum mit verzeigerten Objekten unter Anwendung des Typ-Instanzkonzepts. Das Typ-Instanzkonzept ermöglicht die Generierung von neuen komplexeren Objekten aus zuvor generierten weniger komplexen Objekten. Dabei entsteht ein hierarchisches Instanzierungssystem, das der Aufbauhierarchie der Automatisierungsanlage überlagert wird. Wir an einer Klasse eine Eigenschaft verändert, hinzugefügt, verschoben oder gelöscht, so werden entweder automatisch oder anwendergesteuert alle Instanzen unmittelbar mitgeändert, so dass die Konsistenz der Datenstruktur erhalten bleibt. Die Besonderheit des in FIG 10 dargestellten Typ-Instanzkonzepts besteht darin, dass auch Klassen bereits entgegen den gängigen objektorientierten Konzepten volle Funktionalität besitzen. Diese volle Funktionalitätsfähigkeit basiert darauf, dass auch Klassen bereits Daten mit reserviertem Speicher und ablauffähige Programmmodule besitzen. Der Vorteil einer derartigen Vorgehensweise besteht darin, dass Klassen wie Prototypen behandelt werden können, die sofort ohne zusätzliche Instanziierung, d.h. ohne zusätzlichen Aufwand ausgetestet werden können. Die volle Funktionalität der Klassen beinhaltet wiederum sämtliche Sichten und Facetten der Automatisierungstechnik.

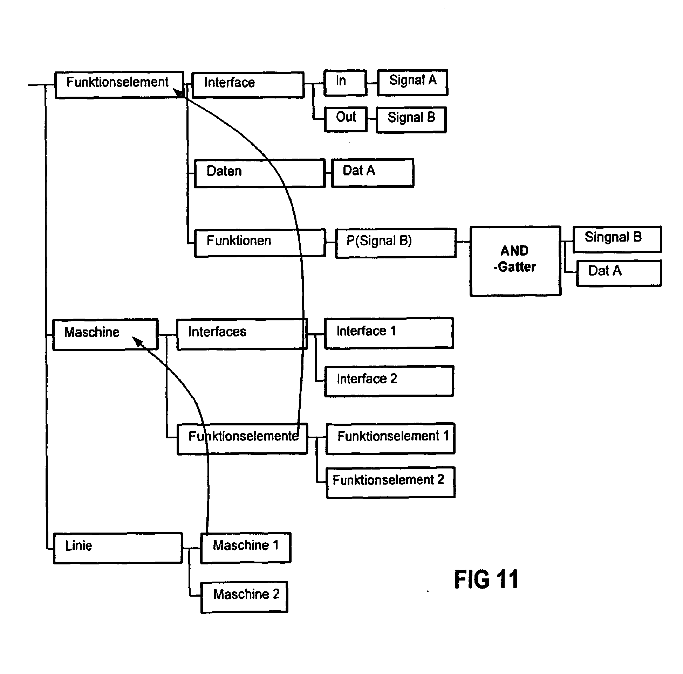

FIG 11 zeigt eine derartige Prinzipdarstellung für einen Aufbau von Anlagenmodulen mittels eines Typ-Instanzkonzeptes.

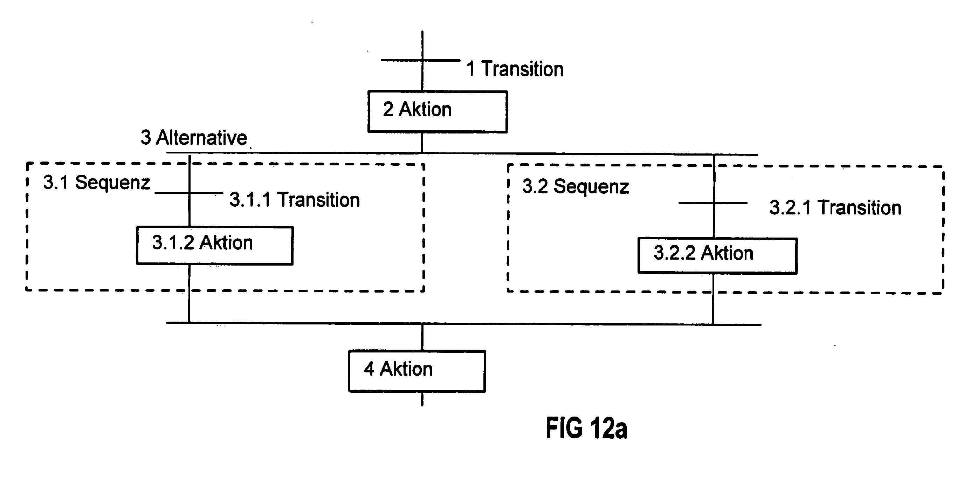

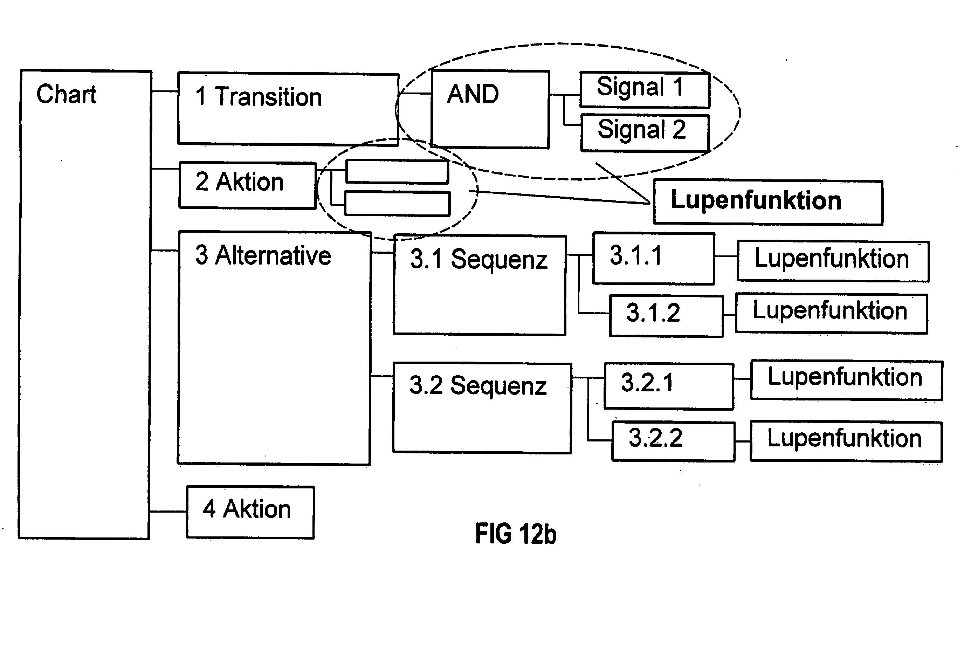

FIG 12a zeigt eine beispielhafte Darstellung einer Schrittkette, wie sie beispielsweise bei gängigen Projektierungssystemen der Automatisierungstechnik Verwendung findet. Eine derartige Schrittkette besteht aus Aktionen sowie Transitionen, d.h. Zuständen und Zustandübergängen. Dem gegenübergestellt ist in FIG 12b ein Objektbaum als Abbildung der in FIG 12a gezeigten Schrittkette.

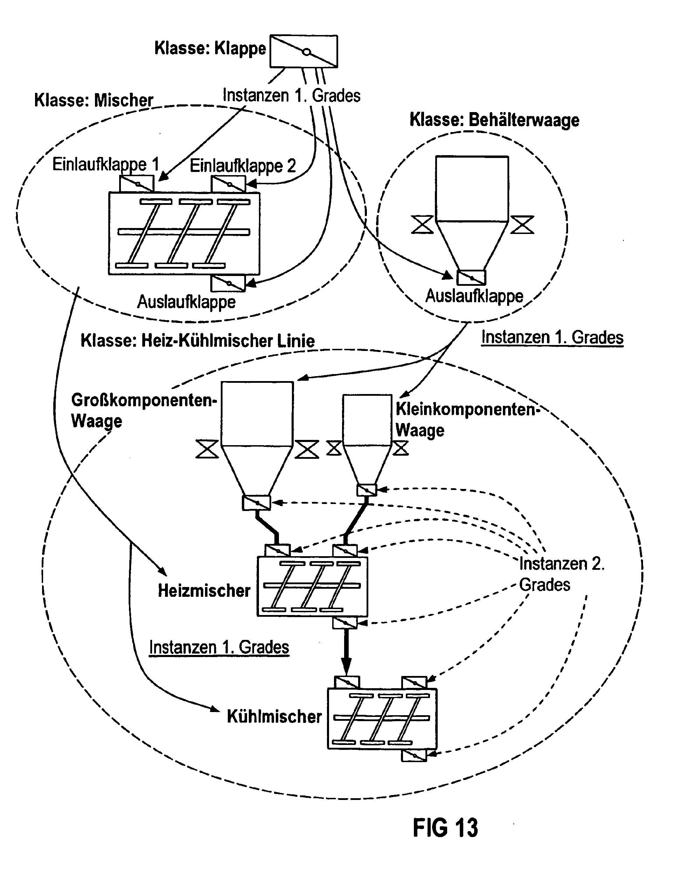

FIG 13 zeigt ein Beispiel für den praktischen Einsatz des Typ-Instanzkonzeptes bei der Projektierung eines Automatisierungssystems.

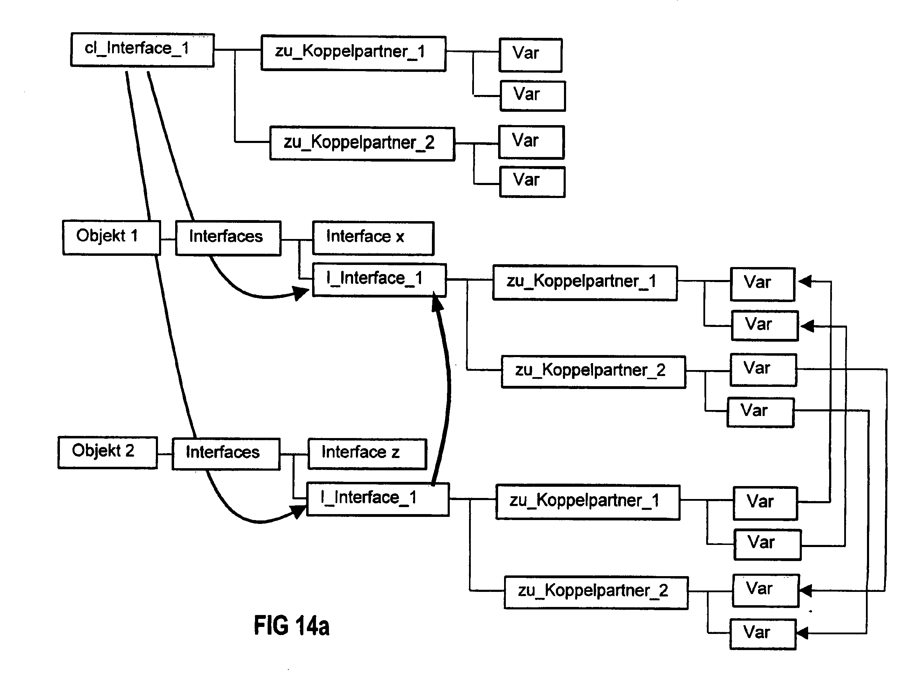

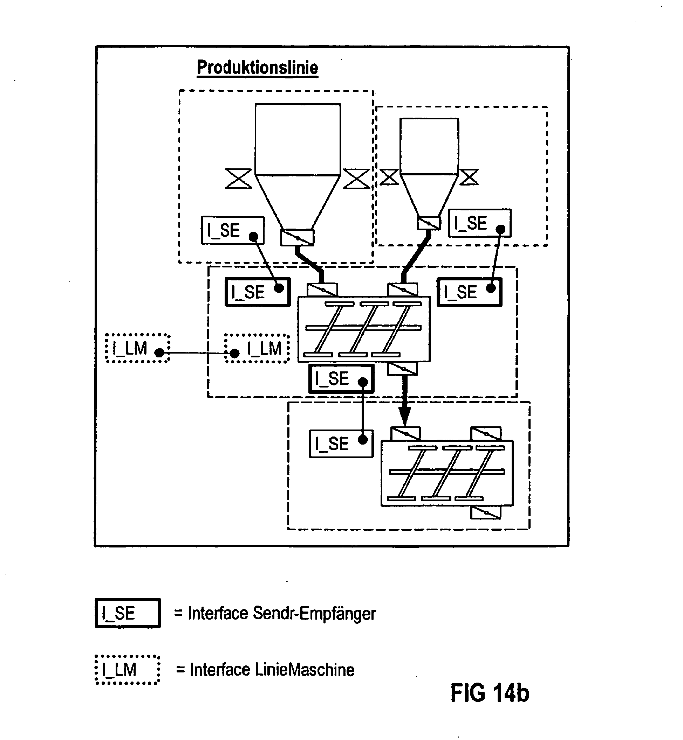

FIG 14a,b zeigen ein Beispiel für den praktischen Einsatz des Typ-Instanzkonzeptes mit OTR-Interfacetechnik.

## Patentansprüche

1. Softwarekomponente (K1..Kn) eines Automatisierungssystems mit einer Datenstruktur aus einem Objektbaum (OTR) mit hierarchisch stufbaren Objekten (O1..Om), wobei der Objektbaum (OTR) zur Abbildung von Sichten der Softwarekomponente (K1..Kn) vorgesehen ist, wobei sämtliche Sichten der Softwarekomponente (K1..Kn) konkret mit Daten des Objektbaumes (OTR) der Softwarekomponente verbunden sind, so dass sich eine einzige Datenhaltung für sämtliche Sichten ergibt, wobei die Sichten der Darstellung der Softwarekomponente in einer 3D-Sicht und Flow-Chart-Sicht, insbesondere SFC-Sicht, dienen.

2. Softwarekomponenten nach Anspruch 1,
**dadurch gekennzeichnet,**
**dass** die Softwarekomponente (K1..Kn) eine erste Softwarekomponentenart (KA1) als Klasse (Kl) aufweist.

3. Softwarekomponente nach einem der Ansprüche 1 bis 2,
**dadurch gekennzeichnet,**
**dass** die erste Softwarekomponentenart (KA1) Daten und/oder ablauffähige Funktionen enthält.

4. Softwarekomponente nach einem der Ansprüche 1 bis 3,
**dadurch gekennzeichnet,**
**dass** die Softwarekomponente (K1..Kn) eine zweite Softwarekomponentenart (KA2) als Instanz (In) der Softwarekomponente aufweist.

5. Softwarekomponente nach einem der Ansprüche 1 bis 4,
**dadurch gekennzeichnet,**
**dass** Mittel zur automatischen Änderung einer aus einer Klasse erzeugten Instanz vorgesehen sind, falls die entsprechende Klasse geändert wird.

6. System nach einem der Ansprüche 1 bis 5,
**dadurch gekennzeichnet,**
**dass** die erste (KA1) und die zweite (KA2) Softwarekomponentenart gleich aufgebaut sind.

7. Softwarekomponente (K1..Kn) nach einem der Ansprüche 1 bis 6,
**dadurch gekennzeichnet,**
**dass** ein Objekt (O1..Om) einer Softwarekomponente mindestens einen Objektknoten aufweist.

8. Softwarekomponente (K1..Kn) nach einem der Ansprüche 1 bis 7,
**dadurch gekennzeichnet,**
**dass** ein einzelner Objektknoten ein Objekt ist.

9. Softwarekomponente (K1..Kn) nach einem der Ansprüche 1 bis 8,
**dadurch gekennzeichnet,**
**dass** der Objektknoten aus Zeigern auf andere Knoten und/oder aus Identifizierungsnummern von anderen Knoten besteht. (I-dentifiern)

10. Softwarekomponente (K1..Kn) nach einem der Ansprüche 1 bis 9,
**dadurch gekennzeichnet,**
**dass** ein Objektknoten (Ks) eine Identifizierungsnummer zur Definition unterschiedlicher Fremdsprachen eines Objekts (O1..Om) besitzt.

11. Softwarekomponente (K1..Kn) nach einem der Ansprüche 1 bis 10,
**dadurch gekennzeichnet,**
**dass** Basisknoten (BKN) zur Generierung von komplexeren Objekten hierarchisierbar sind.

12. Softwarekomponente (K1..Kn) nach einem der Ansprüche 1 bis 11,
**dadurch gekennzeichnet,**
**dass** das Objekt (O1..On) eine elementare Knotenfunktion (KF) insbesondere mit einer hierarchischen Verzeigerung aufweist.

13. Softwarekomponente (K1..Kn) nach einem der Ansprüche 1 bis 12,
**dadurch gekennzeichnet,**
**dass** das Objekt (O1..On) mit einer Basisknotenfunktion (BKF) zur Bestimmung der Funktionalität eines Knotens und/oder untergeordneter Knoten versehen ist.

14. Softwarekomponente (K1..Kn) nach einem der Ansprüche 1 bis 13,
**dadurch gekennzeichnet,**
**dass** zur Generierung einer Funktionalität eines Objekts und/oder einer Softwarekomponente ein Link-Mechanismus zum Verknüpfen von Signalen und/oder Objekten vorgesehen ist.

15. Softwarekomponente (K1..Kn) nach einem der Ansprüche 1 bis 14,
**dadurch gekennzeichnet,**
**dass** der Objektbaum (OTR) zur Realisierung eines Funktionsplans, einer Flow-Chart und/oder einer Schrittkette einer Automatisierungskomponente vorgesehen ist.

16. Softwarekomponente (K1..Kn) nach einem der Ansprüche 1 bis 15,
**dadurch gekennzeichnet,**
**dass** der Objektbaum (OTR) zum Aufbau einer 2D und/oder einer 3D-Grafik vorgesehen ist.

## Claims

1. Software component (K1..Kn) in an automation system with a data structure comprising an object tree (OTR) with hierarchically graduatable objects (O1..Om), where the object tree (OTR) is provided for mapping views of the software component (K1..Kn), where all views of the software component (K1..Kn) are actually connected to data in the object tree (OTR) for the software component so that this results in a single data storage for all views, where the views show the software component in a 3D view and a flowchart view, particularly an SFC view.

2. Software component according to claim 1,
**characterized**
**in that** the software component (K1..Kn) has a first software component type (KA1) as a class (Kl).

3. Software component according to one of claims 1 to 2,
**characterized**
**in that** the first software component type (KA1) contains data and/or executable functions.

4. Software component according to one of claims 1 to 3,
**characterized**
**in that** the software component (K1..Kn) has a second software component type (KA2) as an instance (In) of the software component.

5. Software component according to one of claims 1 to 4,
**characterized**
**in that** means are provided for automatically changing an instance produced from a class if the corresponding class is changed.

6. System according to one of claims 1 to 5,
**characterized**
**in that** the first (KA1) and the second (KA2) software component type are of the same design.

7. Software component (K1..Kn) according to one of claims 1 to 6,
**characterized**
**in that** a software component object (O1..Om) has at least one object node.

8. Software component (K1..Kn) according to one of claims 1 to 7,
**characterized**
**in that** an individual object node is an object.

9. Software component (K1..Kn) according to one of claims 1 to 8,
**characterized**
**in that** the object node comprises pointers to other nodes and/or comprises identification numbers for other nodes (identifiers).

10. Software component (K1..Kn) according to one of claims 1 to 9,
**characterized**
**in that** an object node (Ks) has an identification number for defining different foreign languages for an object (O1..Om).

11. Software component (K1..Kn) according to one of claims 1 to 10,
**characterized**
**in that** base nodes (BKN) can be organized in a hierarchy for the purpose of generating more complex objects.

12. Software component (K1..Kn) according to one of claims 1 to 11,
**characterized**
**in that** the object (O1..On) has an elementary node function (KF), particularly with a hierarchic breakdown.

13. Software component (K1..Kn) according to one of claims 1 to 12,
**characterized**
**in that** the object (O1..On) is provided with a base node function (BKF) for the purpose of determining the functionality of a node and/or of subordinate nodes.

14. Software component (K1..Kn) according to one of claims 1 to 13,
**characterized**
**in that** a link mechanism is provided for logically combining signals and/or objects in order to generate a functionality for an object and/or for a software component.

15. Software component (K1..Kn) according to one of claims 1 to 14,
**characterized**
**in that** the object tree (OTR) is provided for the purpose of producing a function diagram, a flowchart and/or a sequencer for an automation component.

16. Software component (K1..Kn) according to one of claims 1 to 15,
**characterized**
**in that** the object tree (OTR) is provided for setting up a 2D graphic and/or a 3D graphic.

## Revendications

1. Composant logiciel (K1 à Kn) d'un système d'automatisation ayant une structure de données constituée d'une arborescence d'objets (OTR) ayant des objets pouvant être étagés hiérarchiquement (01 à Om), l'arborescence d'objets (OTR) étant prévue pour la reproduction de vues du composant logiciel (K1 à Kn), toutes les vues du composant logiciel (K1 à Kn) étant reliées concrètement à des données de l'arborescence d'objets (OTR) du composant logiciel de telle sorte qu'il en résulte une seule gestion de données pour toutes les vues, les vues servant à la représentation du composant logiciel dans une vue en 3D et une vue dite Flow-Chart, notamment une vue SFC.

2. Composant logiciel selon la revendication 1,
**caractérisé par le fait que** le composant logiciel (K1 à Kn) comporte un premier type de composant logiciel (KA1) comme classe (Kl).

3. Composant logiciel selon l'une des revendications 1 à 2,
**caractérisé par le fait que** le premier type de composant logiciel (KA1) contient des données et/ou des fonctions exécutables.

4. Composant logiciel selon l'une des revendications 1 à 3,
**caractérisé par le fait que** le composant logiciel (K1 à Kn) comporte un deuxième type de composant logiciel (KA2) comme instance (In) du composant logiciel.

5. Composant logiciel selon l'une des revendications 1 à 4,
**caractérisé par le fait que** des moyens sont prévus pour la modification automatique d'une instance produite à partir d'une classe lorsque la classe correspondante est modifiée.

6. Composant logiciel selon l'une des revendications 1 à 5,
**caractérisé par le fait que** le premier (KA1) et le deuxième (KA2) type de composant logiciel ont la même structure.

7. Composant logiciel (K1 à Kn) selon l'une des revendications 1 à 6,
**caractérisé par le fait qu'**un objet (O1 à Om) d'un composant logiciel comporte au moins un noeud d'objet.

8. Composant logiciel (K1 à Kn) selon l'une des revendications 1 à 7,
**caractérisé par le fait qu'**un noeud d'objet individuel est un objet.

9. Composant logiciel (K1 à Kn) selon l'une des revendications 1 à 8,
**caractérisé par le fait que** le noeud d'objet est constitué de pointeurs sur d'autres noeuds et/ou de numéros d'identification d'autres noeuds. (identifiants)

10. Composant logiciel (K1 à Kn) selon l'une des revendications 1 à 9,
**caractérisé par le fait qu'**un noeud d'objet (Ks) a un numéro d'identification pour la définition de différentes langues étrangères d'un objet (01 à Om).

11. Composant logiciel (K1 à Kn) selon l'une des revendications 1 à 10,
**caractérisé par le fait que** des noeuds de base (BKN) sont hiérarchisables pour produire des objets plus complexes.

12. Composant logiciel (K1 à Kn) selon l'une des revendications 1 à 11,
**caractérisé par le fait que** l'objet (01 à On) comporte une fonction de noeud élémentaire (KF) notamment avec un indicateur hiérarchique.

13. Composant logiciel (K1 à Kn) selon l'une des revendications 1 à 12,
**caractérisé par le fait que** l'objet (01 à On) est muni d'une fonction de noeud de base (BKF) pour déterminer la fonctionnalité d'un noeud et/ou de noeuds subordonnés.

14. Composant logiciel (K1 à Kn) selon l'une des revendications 1 à 13,
**caractérisé par le fait que**, pour la production d'une fonctionnalité d'un objet et/ou d'un composant logiciel, il est prévu un mécanisme de liaison (link) pour la combinaison de signaux et/ou d'objets.

15. Composant logiciel (K1 à Kn) selon l'une des revendications 1 à 14,
**caractérisé par le fait que** l'arborescence d'objets (OTR) est prévue pour réaliser un schéma logique, un schéma Flow-Chart et/ou un schéma d'enchaînement d'étapes d'un composant d'automatisation.

16. Composant logiciel (K1 à Kn) selon l'une des revendications 1 à 15,
**caractérisé par le fait que** l'arborescence d'objets (OTR) est prévue pour construire un graphique 2D et/ou un graphique 3D.
